# EUROPÄISCHE PATENTSCHRIFT

(11) **EP 1 285 796 B1**
(45) Veröffentlichungstag und Bekanntmachung des Hinweises auf die Patenterteilung: **08.11.2006**
(21) Anmeldenummer: 02016701.1
(22) Anmeldetag: 26.07.2002
(51) Int. Cl.: B60J 7/02, B60J 7/04

(54) **Führungsanordnung für ein öffnungsfähiges Fahrzeugdach**
Guide arrangement for an openable vehicle roof
Dispositif de guide pour un toit ouvrant pour véhicule

(30) Priorität: 07.08.2001 DE 10137949
(43) Veröffentlichungstag der Anmeldung: 26.02.2003
(73) Patentinhaber: Webasto Vehicle Systems International GmbH, 82131 Stockdorf (DE)
(72) Erfinder: Färber, Manfred, 82407 Wielenbach (DE)
(74) Vertreter: Konnerth, Dieter Hans

(56) Entgegenhaltungen:
- DE-A- 19 514 586
- DE-C- 10 024 442
- GB-A- 2 164 006
- US-A- 4 892 351
- US-A- 5 114 208

## Beschreibung

Die vorliegende Erfindung betrifft eine Führungsanordnung für ein in Dachlängsrichtung verschiebbar geführtes Verschlusselement für eine Dachöffnung eines Fahrzeugdaches gemäß dem Oberbegriff des Anspruchs 1.

Eine solche gattungsgemäße Führungsanordnung ist beispielsweise aus der US-A-3 905 641 und der US-A-3 005 226 bekannt, wobei die Führungselemente jeweils als Führungsstege ausgebildet sind und die Gleiteranordnungen als fest mit einem Schiebedeckel verbundene Führungsschuhe ausgebildet sind.

Ferner sind zahlreiche Führungsanordnungen für Fahrzeugdächer bekannt, bei welchen in Dachlängsrichtung verlaufende karosseriefeste Führungskanäle vorgesehen sind, in welchen Gleitschuhe geführt sind, die entweder direkt oder über eine Verstellmechanik mit einem Dachverschlusselement, beispielsweise einem Schiebedeckel, verbunden sind.

Diese bekannten Führungssysteme sind generell für in zwei oder drei Raumrichtungen gebogene Führungsschienen nur wenig geeignet, da die Führungskanäle sehr toleranzanfällig sind, Form- und Lagefehler der Führungskanäle in der Dachquerrichtung zu Schwergängigkeit führen können, im Bereich kleiner Krümmungsradien zusätzliche Schwergängigkeit auftreten kann sowie die Herstellung solcher Führungsschienen mit starken Biegungen im Rahmen der erforderlichen Toleranz nur schwer möglich ist.

In der DE 100 24 442 C1 ist eine Führungsanordnung für ein öffnungsfähiges Fahrzeugdach beschrieben, bei welcher die in Dachlängsrichtung verlaufenden Führungselemente als stegartige Rundführungen mit kreisförmigem Querschnitt ausgebildet sind, welche von hohlzylindrisch ausgebildeten Gleitern umgriffen werden, die fest mit einem Deckel des Fahrzeugdaches verbunden sind.

Es ist Aufgabe der vorliegenden Erfindung, eine Führungsanordnung für ein öffnungsfähiges Fahrzeugdach zu schaffen, welches wenig toleranzanfällig ist und insbesondere für stark gekrümmte Führungsbahnen geeignet ist.

Diese Aufgabe wird erfindungsgemäß durch eine Führungsanordnung mit den Merkmalen des Anspruchs 1 gelöst. Bei dieser Führungsanordnung ist vorteilhaft, dass durch das Vorsehen einer Rundführung und durch die Drehbarkeit des Drehgleiterkäfigs bezüglich des bzw. der Drehgleiter die Toleranzempfindlichkeit der Führung verringert werden kann, eine Form- und Lageabhängigkeit vermieden werden kann, da keine innere Führung erforderlich ist, ein Verkanten der Gleiteranordnung verhindert werden kann, die Baubreite in Dachquerrichtung verringert werden kann und auch eine starke Krümmung der Führungselemente in allen Raumrichtungen bei hoher Funktionssicherheit der Führung ermöglicht wird.

Bevorzugte Ausgestaltungen der Erfindung ergeben sich aus den Unteransprüchen.

Vorzugsweise enthält der von dem bzw. den Drehgleiter(n) umgriffene Teil jeder Rundführung eine kreisförmige Querschnittsform. Für eine verbesserte Abstützung ist es zweckmäßig, wenn jede Gleiteranordnung zwei in Dachlängsrichtung versetzte Drehgleiter umfasst. Dabei kann vorgesehen sein, dass bei jeder Gleiteranordnung der Käfig für den einen Drehgleiter eine Anlagefläche nach außen in der Dachquerrichtung und für den anderen Drehgleiter eine Anlagefläche nach innen in der Dachquerrichtung umfasst, während die Drehgleiter in der jeweils anderen Richtung nach innen bzw. außen bezüglich des Käfigs frei sind. Der Käfig für beide Drehgleiter kann in der Dachquerrichtung je eine Anlagefläche nach außen und nach innen aufweisen.

Zweckmäßigerweise ist die Verbindungsanordnung so ausgebildet, dass der Drehgleiterkäfig bezüglich des Verschlusselements in Dachquerrichtung verschiebbar und um eine in Dachquerrichtung verlaufende Drehachse schwenkbar ist. Des weiteren kann die Verbindungsanordnung so ausgebildet sein, dass der Drehgleiterkäfig bezüglich des Verschlusselements zusätzlich um eine in Dachhochrichtung verlaufende Drehachse schwenkbar ist.

Zweckmäßigerweise sind die Drehgleiter aus Kunststoff gefertigt. Das Verschlusselement ist insbesondere ein Deckel eines Schiebedaches, eines Schiebehebedaches, eines Spoilerdaches oder eine Lamelle eines Lamellendaches.

Im folgenden wird die Erfindung anhand der Zeichnung beispielhaft näher erläutert. Es zeigt:
- FIG. 1: eine schematische perspektivische Ansicht einer erfindungsgemäßen Führungsanordnung für ein Deckelelement eines Fahrzeugdaches;
- FIG. 2: eine schematische vergrößerte perspektivische Detailansicht der Führungsanordnung gemäß einer ersten Ausführungsform;
- FIG. 3: eine Schnittansicht entlang der Linie III-III in Fig. 2;
- FIG. 4: eine Schnittansicht entlang der Linie IV-IV in Fig. 2;
- FIG. 5: eine Ansicht wie Fig. 2, wobei jedoch eine alternative Ausführungsform der Führungsanordnung dargestellt ist;
- FIG. 6: eine Schnittansicht entlang der Linie VI-VI von Fig. 5;
- FIG. 7: eine Schnittansicht entlang der Linie VII-VII von Fig. 5; und
- FIG. 8: eine Ansicht entsprechend Fig. 2, wobei jedoch die Darstellung aus der in Fig. 2 mit "X" bezeichneten Richtung erfolgt.

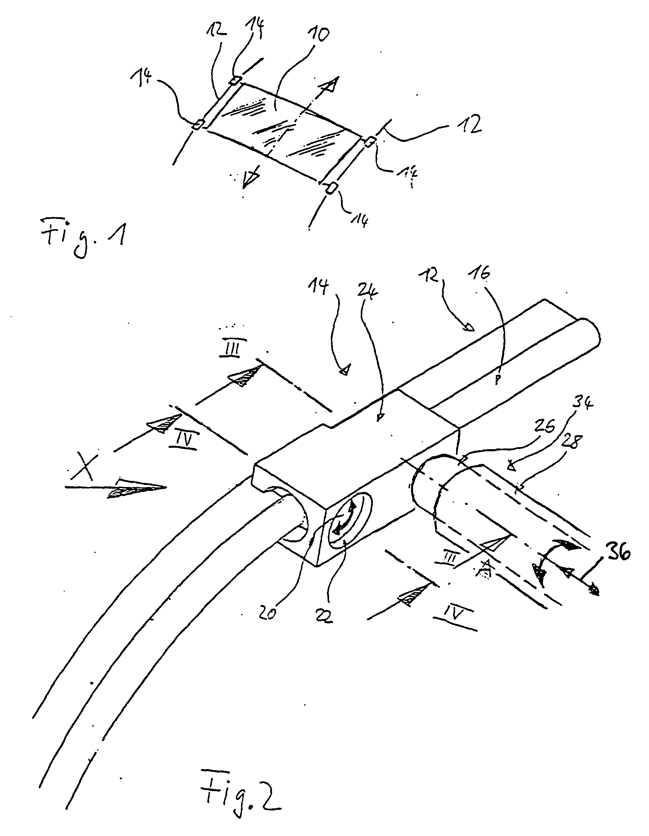

Fig. 1 zeigt ein, wie mit Pfeilen angedeutet, in Dachlängsrichtung verschiebbares Deckelelement 10, welches eine Dachöffnung in einer festen Dachfläche eines Fahrzeugs verschließen bzw. wahlweise freilegen kann. Seitlich des Deckelelements 10 ist jeweils ein in Dachlängsrichtung verlaufendes Führungselement 12 gezeigt, entlang welchem das Deckelelement 10 mittels Gleiteranordnungen 14 in Dachlängsrichtung verschiebbar geführt ist. Auf jeder Seite des Deckelelements 10 sind dabei zwei Gleiteranordnungen 14 vorgesehen, die jeweils am vorderen bzw. hinteren Ende des Deckelelements 10 mit diesem verbunden sind. Bei dem Deckelelement 10 kann es sich z.B. um einen einzigen oder einen von mehreren Deckeln eines Schiebedaches, Schiebehebedaches oder Spoilerdaches sowie um eine Lamelle eines Lamellendaches handeln.

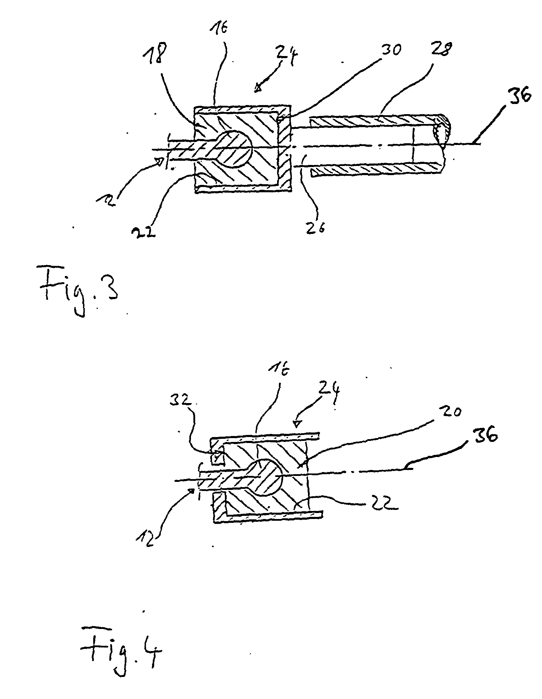

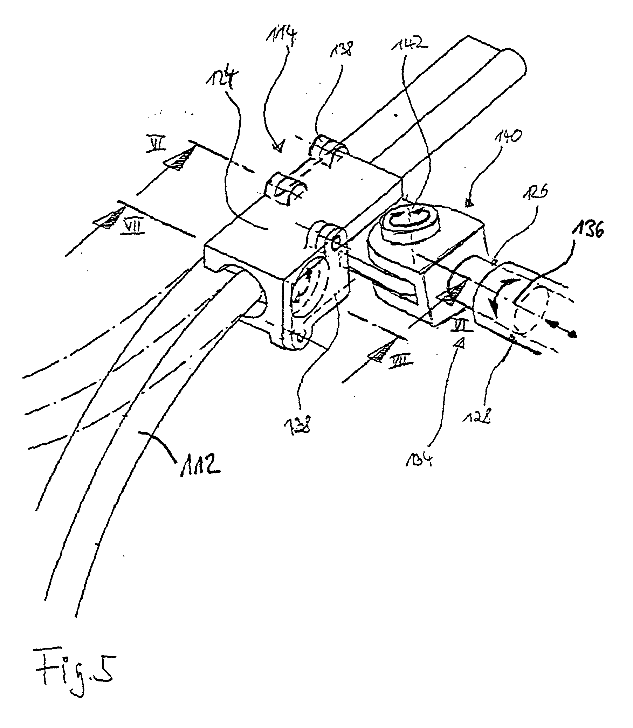

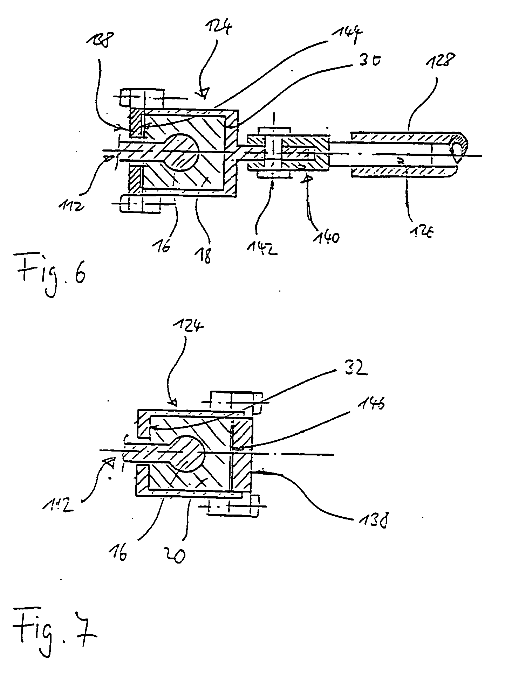

In FIG. 2 ist eine Ausführungsform der linken vorderen Gleiteranordnung 14 im Detail gezeigt. Das Führungselement 12 ist als horizontal orientierte stegartige Führung ausgebildet, wobei das in Dachquerrichtung innenliegende Ende des Stegs als zylindrische Rundführung 16 mit kreisförmigem Querschnitt ausgebildet ist. Unter "Rundführung" soll vorliegend ein Führungselement verstanden werden, welches in dem von einer Gleiteranordnung umgriffenen Teil eine Außenumfangsfläche mit abgerundeten Konturen aufweist, d.h. die Querschnittsform in diesem Bereich ist am Außenumfang abgerundet, wobei die Querschnittsform vorzugsweise kreisförmig ist. Die Rundführung 16 wird gemäß Fign. 3, 4 und 8 jeweils von einem vorderen Drehgleiter 18 und einem in Dachlängsrichtung nach hinten versetzt dazu angeordneten hinteren Drehgleiter 20 umgriffen. Die Drehgleiter 18 und 20 sind vorzugsweise aus Kunststoff gefertigt und sind in entsprechenden Lagerschalen 22 eines Käfigs 24 für die Drehgleiter 18, 20 aufgenommen. Dabei sind die Drehgleiter 18, 20 jeweils um eine in Dachquerrichtung verlaufende Drehachse 36 drehbar bezüglich der Lagerschalen 22 gelagert. Der Käfig 24 ist ferner mit einem sich in Dachquerrichtung nach innen erstreckenden Drehschaft 26 versehen, der in eine rohrförmige Aufnahme 28, die mit dem Dekkelelement 10 verbunden ist, so eingesteckt ist, dass der Drehschaft 26 bezüglich der Aufnahme 28 in Dachquerrichtung verschiebbar und um die in Dachquerrichtung verlaufende Längsachse des Drehschafts 26 drehbar bezüglich der Aufnahme 28 in der Aufnahme 28 gelagert ist (diese Freiheitsgrade sind in Fig. 2 mit Pfeilen angedeutet). Der Drehschaft 26 ist im Bereich des vorderen Drehgleiters 18 ausgebildet.

Gemäß Fig. 3 ist der Käfig 24 mit einer Anlagefläche 30 versehen, welche als Anlagefläche bzw. Anschlag für den vorderen Drehgleiter 18 in Dachquerrichtung nach innen dient. In Dachquerrichtung nach außen ist der vordere Gleiter 18 dagegen bezüglich des Käfigs 24 frei. Umgekehrt ist der Käfig 24 mit einer Anlagefläche 32 versehen, welche als Anschlag für den hinteren Drehgleiter 20 in Dachquerrichtung nach außen wirkt, während er in Dachquerrichtung nach innen bezüglich des Käfigs 24 frei ist.

Die Rundführung 16 ist gemäß Fign. 2 und 8 relativ stark in der von der Dachlängs- und Dachhochrichtung aufgespannten Ebene gekrümmt. Dadurch, dass zwei Drehgleiter 18, 20 vorgesehen sind, welche bezüglich des Käfigs 24 jeweils um eine in Dachquerrichtung verlaufende Drehachse 36 drehbar sind, kann trotz torsionssteif ausgebildetem Käfig 24 eine leichtgängige Führung entlang des Führungselements 12 erzielt werden, ohne dass eine übermäßige Reibung oder ein Verkanten der Gleiteranordnung 14 auftreten würde. Das Vorsehen von zwei statt nur einem Drehgleiter hat einerseits den Vorteil, dass kleine Krümmungsradien ermöglicht werden, da bei nur einem Drehgleiter durch die große Winkeländerung der Umschlingungswinkel der Lagerschale im Drehgleiterkäfig nicht ausreichen würde, da hierbei der Drehgleiterkäfig nicht drehbar gelagert sein könnte. Zum anderen wird die Fertigung bzw. Montage dadurch erleichtert, dass jede der beiden Lagerschalen 22 nach einer Seite offen ist, was bei nur einem Drehgleiter ebenfalls nicht möglich wäre. Fertigungstechnisch ergibt sich eine einfache Entformmöglichkeit der Lagerschalen im Werkzeug des Drehgleiterkäfigs.

Eine Drehung des Lagerkäfigs 24 um eine in Dachquerrichtung liegende Drehachse 36 während des Verstellens entlang des Führungselements 12 kann bezüglich des Deckelelements 10 durch die geschilderte Drehlagerung des Drehschafts 26 bei der von dem Drehschaft 26 und der Aufnahme 28 gebildeten Verbindungsanordnung 34 ausgeglichen werden. Dies gilt ebenso für eine Abweichung von einer Parallelität zwischen den beiden Führungselementen 12.

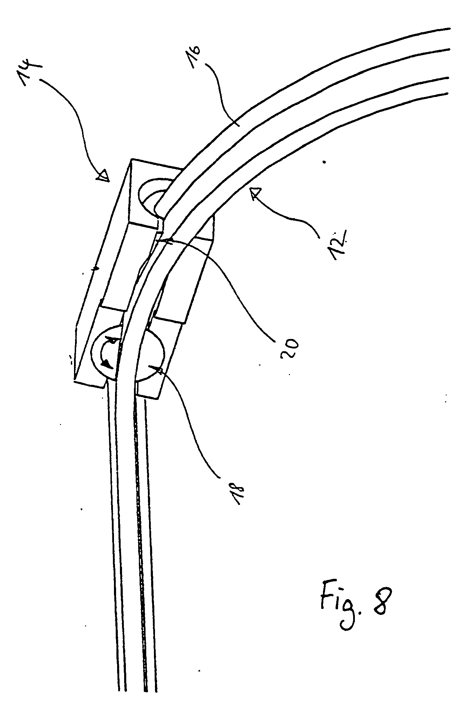

Die Ausführungsform gemäß Fign. 5 bis 7 unterscheidet sich von der bisher beschriebenen ersten Ausführungsform im wesentlichen dadurch, dass hier die Gleiteranordnung 114 zusätzlich für in Dachquerrichtung gekrümmte, d.h. in alle drei Raumrichtungen gekrümmte Führungselemente 12 geeignet ist. Die Krümmung des Führungselements 112 ist in Fig. 5 mit unterbrochenen Linien angedeutet. Um ein exaktes Nachfahren der Krümmung in Dachquerrichtung zu ermöglichen, sind bei der Ausführungsform gemäß den Fign. 5 bis 7 die Lagerschalen 22 des Käfigs 124 auf der offenen Seite durch Deckel 138 verschlossen, die beispielsweise wie in Fig. 5 angedeutet mittels einer Schraubverbindung an dem Käfig 124 befestigt sein können. Die durch die Deckel 138 gebildete Anlagefläche in Dachquerrichtung nach außen bzw. nach innen ist in Fig. 6 bzw. Fig. 7 mit dem Bezugszeichen 144 bzw. 146 bezeichnet.

Da durch die Krümmung in Dachquerrichtung ein Verdrehen des Käfigs 124 um eine in Dachhochrichtung verlaufende Achse bezüglich des Deckelelements 10 auftreten kann, ist hier der Drehschaft 126 nicht fest mit dem Käfig 124 verbunden, sondern über eine Gabelführung 140 um eine in Dachhochrichtung verlaufende Schwenklagerachse 142 schwenkbar mit dem Käfig 124 verbunden (dieser Freiheitsgrad ist in Fig. 5 mit entsprechenden Pfeilen angedeutet). Ferner ist der Drehschaft 126 bei der Ausführungsform gemäß Fig. 2 drehbar und axial verschiebbar in der Aufnahme 128 gelagert. Auf diese Weise ist die Verbindungsanordnung 134 so ausgebildet, dass der Käfig 124 bezüglich des Deckelelements 10 in Dachquerrichtung verschiebbar, um eine in Dachhochrichtung verlaufende Achse 142 schwenkbar sowie um eine in Dachquerrichtung verlaufende Achse 136 drehbar ist.

### Bezugszeichenliste

- 10: Deckelelement
- 12, 112: Führungselement
- 14, 114: Gleiteranordnung
- 16: Rundführung
- 18, 20: Drehgleiter
- 22: Lagerschalen
- 24, 124: Käfig für 18, 20
- 26, 126: Drehschaft
- 28, 128: Aufnahme für 26, 126
- 30, 32: Anlageflächen an 24, 124 für 18 bzw. 20
- 34, 134: Verbindungsanordnung
- 36, 136: Schwenkachse
- 138: Deckel für 22
- 140: Gabelführung
- 142: Drehachse von 140
- 144, 146: Anlageflächen von 138

## Patentansprüche

1. Führungsanordnung für ein in Dachlängsrichtung verschiebbar geführtes Verschlusselement (10) für eine Dachöffnung eines Fahrzeugdaches, mit einem karosseriefesten, in Dachlängsrichtung verlaufenden Führungselement (12, 112) auf jeder Seite des Verschlusselements (10), welches jeweils von mindestens einer Gleiteranordnung (14, 114) umgriffen wird, die auf dem Führungselement (12, 112) verschiebbar gelagert ist und mit dem Verschlusselement (10) über eine Verbindungsanordnung (34, 134) verbunden ist, wobei die Führungselemente (12, 112) jeweils eine Rundführung (16) aufweisen
**dadurch gekennzeichnet,**
**dass** jede Gleiteranordnung (14, 114) einen mit der Verbindungsanordnung (34, 134) verbundenen Drehgleiterkäfig (24, 124) und mindestens einen Drehgleiter (18, 20) umfasst, wobei der bzw. jeder Drehgleiter (18, 20) die Rundführung (16) umgreift und in dem Drehgleiterkäfig (24, 124) um eine in Dachquerrichtung verlaufende Drehachse (36, 136) drehbar gelagert ist.

2. Führungsanordnung gemäß Anspruch 1,
**dadurch gekennzeichnet, dass** der von dem bzw. den Drehgleiter(n) (18, 20) umgriffene Teil jeder Rundführung (16) eine kreisförmige Querschnittsform aufweist.

3. Führungsanordnung gemäß Anspruch 1 oder 2,
**dadurch gekennzeichnet, dass** jede Gleiteranordnung (14, 114) zwei in Dachlängsrichtung versetzte Drehgleiter (18, 20) umfasst.

4. Führungsanordnung gemäß Anspruch 1 bis 3,
**dadurch gekennzeichnet, dass** bei jeder Gleiteranordnung (14) der Käfig (24) für den einen Drehgleiter (20) eine Anlagefläche (32) nach außen in der Dachquerrichtung und für den anderen Drehgleiter (18) eine Anlagefläche (30) nach innen in der Dachquerrichtung umfasst, während die Drehgleiter (18, 20) in der jeweils anderen Richtung nach innen bzw. außen bezüglich des Käfigs (24) frei sind.

5. Führungsanordnung gemäß einem der Ansprüche 1 bis 3,
**dadurch gekennzeichnet, dass** bei jeder Gleiteranordnung (114) der Käfig (124) für beide Drehgleiter (18, 20) je eine Anlagefläche (30, 32, 144, 146) nach außen und nach innen in der Dachquerrichtung umfasst.

6. Führungsanordnung gemäß einem der Ansprüche 1 bis 5,
**dadurch gekennzeichnet, dass** die Verbindungsanordnung (34, 134) so ausgebildet ist, dass der Drehgleiterkäfig (24, 124) bezüglich des Verschlusselements (10) in Dachquerrichtung verschiebbar und um eine in Dachquerrichtung verlaufende Drehachse (36, 136) schwenkbar ist.

7. Führungsanordnung gemäß Anspruch 6,
**dadurch gekennzeichnet, dass** die Verbindungsanordnung (34, 134) so ausgebildet ist, dass der Drehgleiterkäfig (24, 124) bezüglich des Verschlusselements (10) zusätzlich um eine in Dachhochrichtung verlaufende Drehachse (142) schwenkbar ist.

8. Führungsanordnung gemäß Anspruch 6 oder 7,
**dadurch gekennzeichnet, dass** jeder Käfig (24, 124) mit einem nach innen in Dachquerrichtung abstehenden Drehschaft (26, 126) verbunden ist, der so mit einem mit dem Verschlusselement (10) verbundenen Gegenstück (28, 128) in Steckeingriff steht, dass er bezüglich des Gegenstücks (28, 128) in Dachquerrichtung verschiebbar und um die Schaftachse (36, 136) drehbar ist.

9. Führungsanordnung gemäß Anspruch 8,
**dadurch gekennzeichnet, dass** das Gegenstück als Aufnahme (28, 128) ausgebildet ist, in welche der Drehschaft (26, 126) eingesteckt ist.

10. Führungsanordnung gemäß Anspruch 8 oder 9, sofern auf Anspruch 6 zurückbezogen,
**dadurch gekennzeichnet, dass** jeder Drehschaft (26) fest mit dem entsprechenden Käfig (24) verbunden ist.

11. Führungsanordnung gemäß Anspruch 8 oder 9, sofern auf Anspruch 6 zurückbezogen,
**dadurch gekennzeichnet, dass** jeder Drehschaft (126) über ein Drehlager (142), dessen Schwenkachse in Dachhochrichtung verläuft, mit dem entsprechenden Käfig (124) verbunden ist.

12. Führungsanordnung gemäß einem der Ansprüche 1 bis 11,
**dadurch gekennzeichnet, dass** an jeder Seite des Verschlusselements (10) zwei in Dachlängsrichtung versetzte Gleiteranordnungen (14, 114) vorgesehen sind.

## Claims

1. Guide arrangement for a closure element (10), which is guided such that it can be displaced in the roof longitudinal direction, for a roof opening of a vehicle roof, having a guide element (12, 112) fixed to the body and running in the roof longitudinal direction on each side of the closure element (10), around which guide element in each case at least one slide arrangement (14, 114) engages, which is displaceably mounted on the guide element (12, 112) and is connected to the closure element (10) via a connecting arrangement (34, 134), the guide elements (12, 112) in each case having a round guide (16), **characterized in that** each slide arrangement (14, 114) comprises a rotating slide cage (24, 124) connected to the connecting arrangement (34, 134) and at least one rotating slide (18, 20), the or each rotating slide (18, 20) engaging around the round guide (16) and being mounted in the rotating slide cage (24, 124) such that it can rotate about an axis of rotation (36, 136) running in the roof transverse direction.

2. Guide arrangement according to Claim 1, **characterized in that** the part of each round guide (16) around which the rotating slide(s) (18, 20) engage(s) has a circular cross-sectional shape.

3. Guide arrangement according to Claim 1 or 2, **characterized in that** each slide arrangement (14, 114) comprises two rotating slides (18, 20) offset in the roof longitudinal direction.

4. Guide arrangement according to Claims 1 to 3, **characterized in that** in each slide arrangement (14) the cage (24) for one rotating slide (20) comprises a contact surface (32) on the outside in the roof transverse direction and for the other rotating slide (18) comprises a contact surface (30) on the inside in the roof transverse direction, while in the respective other direction the rotating slides (18, 20) are free on the inside and outside with respect to the cage (24).

5. Guide arrangement according to one of Claims 1 to 3, **characterized in that** in each slide arrangement (114) the cage (124) for the two rotating slides (18, 20) in each case comprises a contact surface (30, 32, 144, 146) on the outside and on the inside in the roof transverse direction.

6. Guide arrangement according to one of Claims 1 to 5, **characterized in that** the connecting arrangement (34, 134) is formed in such a way that the rotating slide cage (24, 124) can be displaced in the roof transverse direction with respect to the closure element (10) and can be pivoted about an axis of rotation (36, 136) running in the roof transverse direction.

7. Guide arrangement according to Claim 6, **characterized in that** the connecting arrangement (34, 134) is formed in such a way that the rotating slide cage (24, 124) can additionally be pivoted with respect to the closure element (10) about an axis of rotation (142) running in the roof vertical direction.

8. Guide arrangement according to Claim 6 or 7, **characterized in that** each cage (24, 124) is connected to a rotating shaft (26, 126) which projects inwards in the roof transverse direction and which is plugged into a mating piece (28, 128) connected to the closure element (10), in such a way that it can be displaced in the roof transverse direction with respect to the mating piece (28, 128) and can be rotated about the shaft axis (36, 136).

9. Guide arrangement according to Claim 8, **characterized in that** the mating piece is formed as a holder (28, 128), into which the rotating shaft (26, 126) is plugged.

10. Guide arrangement according to Claim 8 or 9, to the extent that they refer back to Claim 6, **characterized in that** each rotating shaft (26) is firmly connected to the corresponding cage (24).

11. Guide arrangement according to Claim 8 or 9, to the extent that they refer back to Claim 6, **characterized in that** each rotating shaft (126) is connected to the corresponding cage (124) via a rotary bearing (142) whose pivot axis runs in the roof vertical direction.

12. Guide arrangement according to one of Claims 1 to 11, **characterized in that** two slide arrangements (14, 114) offset in the roof longitudinal direction are provided on each side of the closure element (10).

## Revendications

1. Dispositif de guidage pour un élément de fermeture (10), guidé en coulissement dans le sens longitudinal du toit, pour une ouverture de toit d'un toit de véhicule, avec de chaque côté de l'élément de fermeture (10) un élément de guidage (12, 112) solidaire de la carrosserie, élément qui s'étend dans le sens longitudinal du toit et autour duquel s'engage respectivement au moins un ensemble de coulisseau (14, 114), qui est monté à coulissement sur l'élément de guidage (12, 112) et qui est relié à l'élément de fermeture (10) par l'intermédiaire d'un ensemble de liaison (34, 134), sachant que les éléments de guidage (12, 112) présentent respectivement un guide rond (16), **caractérisé en ce que** chaque ensemble de coulisseau (14, 114) comprend une cage (24, 1224) de coulisseau rotatif reliée à l'ensemble de liaison (34, 134) et au moins un coulisseau rotatif (18, 20), sachant que le ou chaque coulisseau rotatif (18, 20) s'engage autour du guide rond (16) et est monté dans la cage (24, 1224) de coulisseau rotatif à rotation autour d'un axe de rotation (36, 136) s'étendant dans le sens transversal du toit.

2. Dispositif de guidage selon la revendication 1, **caractérisé en ce que** la partie de chaque guide rond (16) autour de laquelle s'engage le ou les coulisseaux rotatifs (18, 20) présente une forme de section circulaire.

3. Dispositif de guidage selon la revendication 1 ou 2, **caractérisé en ce que** chaque ensemble de coulisseau (14, 114) comprend deux coulisseaux rotatifs (18, 20) décalés dans le sens longitudinal du toit.

4. Dispositif de guidage selon l'une des revendications 1 à 3, **caractérisé en ce que**, pour chaque ensemble de coulisseau (14), la cage (24) comprend une surface de butée (32) vers l'extérieur dans le sens transversal du toit pour l'un (20) des coulisseaux rotatifs et une surface de butée (30) vers l'intérieur dans le sens transversal du toit pour l'autre coulisseau rotatif (18), tandis que les coulisseaux rotatifs (18, 20) sont libres par rapport à la cage (24) dans l'autre direction respective, respectivement vers l'intérieur ou vers l'extérieur.

5. Dispositif de guidage selon l'une des revendications 1 à 3, **caractérisé en ce que**, pour chaque ensemble de coulisseau (114), la cage (124) comprend une surface de butée respective (30, 32, 144, 146) vers l'extérieur et vers l'intérieur dans le sens transversal du toit pour chacun des deux coulisseaux rotatifs (18, 20).

6. Dispositif de guidage selon l'une des revendications 1 à 5, **caractérisé en ce que** l'ensemble de liaison (34, 134) est conçu de telle sorte que la cage (24, 1224) de coulisseau rotatif est, par rapport à l'élément de fermeture (10), coulissante dans le sens transversal du toit et pivotante autour d'un axe de rotation (36, 136) s'étendant dans le sens transversal du toit.

7. Dispositif de guidage selon la revendication 6, **caractérisé en ce que** l'ensemble de liaison (34, 134) est conçu de telle sorte que la cage (24, 1224) de coulisseau rotatif est en outre, par rapport à l'élément de fermeture (10), pivotante autour d'un axe de rotation (142) s'étendant dans le sens vertical du toit.

8. Dispositif de guidage selon la revendication 6 ou 7, **caractérisé en ce que** chaque cage (24, 124) est reliée à une tige rotative (26, 126) partant dans le sens transversal du toit, qui se trouve en engagement par emboîtement avec un élément complémentaire (28, 128) relié à l'élément de fermeture (10) de telle sorte qu'elle est, par rapport à l'élément complémentaire (28, 128), coulissante dans le sens transversal du toit et rotative autour de l'axe (36, 136) de la tige.

9. Dispositif de guidage selon la revendication 8, **caractérisé en ce que** l'élément complémentaire est réalisé sous la forme d'un élément récepteur (28, 128) dans lequel est emboîtée la tige rotative (26, 126).

10. Dispositif de guidage selon la revendication 8 ou 9, en référence à la revendication 6, **caractérisé en ce que** chaque tige rotative (26) est fixement reliée à la cage correspondante (24).

11. Dispositif de guidage selon la revendication 8 ou 9, en référence à la revendication 6, **caractérisé en ce que** chaque tige rotative (126) est reliée à la cage correspondante (124) par l'intermédiaire d'un pivot (142) dont l'axe de pivotement s'étend dans le sens vertical du toit.

12. Dispositif de guidage selon l'une des revendications 1 à 11, **caractérisé en ce que** deux ensembles de coulisseau (14, 114) décalés dans le sens longitudinal du toit sont prévus sur chaque côté de l'élément de fermeture (10).
